# EUROPEAN PATENT SPECIFICATION

(11) **EP 2 412 059 B1**
(45) Date of publication and mention of the grant of the patent: **31.08.2016**
(21) Application number: 10725229.8
(22) Date of filing: 25.03.2010
(51) Int. Cl.: H01R 4/20, C22C 9/06, C22C 9/00, H02G 1/16, H01R 13/03

(54) **CRIMP JOINT FOR REPAIRING WIRING**
SICKENVERBINDUNG ZUR REPARATUR VON SCHALTUNGEN
JOINT DE SERTISSAGE POUR RÉPARER UN CÂBLAGE

(30) Priority: 27.03.2009 GB 0905346
(43) Date of publication of application: 01.02.2012
(73) Proprietor: British Telecommunications, London EC1A 7AJ (GB)
(72) Inventor: FISK, Christopher, Suffolk IP1 4LN (GB); WARREN, John, Andrew, Suffolk IP5 3RE (GB); PARKIN, Colin, Essex CO3 4TD (GB); STUDD, Ramon, Suffolk IP14 4BY (GB)
(74) Representative: Geffen, Nigel Paul
(86) International application number: PCT/GB2010/000576
(87) International publication number: WO 2010/109202

(56) References cited:
- DE-U1- 20 122 391
- US-A- 3 739 322
- US-A- 4 020 546
- ANONYMOUS: 'CuNi10Fe1Mn', [Online] 05 January 2006, XP055191160 Retrieved from the Internet: <URL:https://www.kupferinstitut.de/fileadmi n/user_upload/kupferinstitut.de/de/Document s/Shop/Verlag/Downloads/Werkstoffe/Datenbla etter/Kupfer-Nickel/CuNi10Fe1Mn.pdf> [retrieved on 2015-05-22]

## Description

The present invention relates to apparatus for repairing wiring and related aspects. In particular but not exclusively, the invention relates to apparatus, such as a crimp, suitable for repairing wiring in a high density wiring environment where several wires and cables are very close proximity to each other. Such environments include, for example, apparatus for repairing wiring connected to and located within telecommunications exchange apparatus.

High-density wiring environments require wiring and wiring repairs to have characteristics to meet various criteria which may be set by one or more standards bodies for wiring and wiring repairs in a particular environment. The criteria may indicate that wiring repairs have appropriate electrical properties and have certain other physical characteristics, for example, the amount of stress and strain (e.g. compressive, lateral, and longitudinal) the repair is robust against. For example, lateral and longitudinal movement of as well as elongation forces applied to wiring/cabling located in a high-density wiring environment can result in considerable frictional forces being exerted on the cabling (and the wiring housed within cabling) and thus wire repairs in such locations must be appropriately resilient. Examples of high-density wiring environments include duct space and main distribution frames within telecommunications exchanges.

For example, within a telephone exchange, extremely thin diameter wiring (wiring with a cross-sectional area of approximately 1mm² or less) must be able to withstand a relatively high amount of longitudinal strain (i.e., strain along the longitudinal axis of the wire), for example, 40 N or more. An idea of the levels of wiring density in a high-density wiring environment can be obtained by considering a typical number of wires per meter squared on the horizontal portion of a MDF (Main Distribution Frame) which can be thousands. An MDF bearer can approximately 500mm in cross-sectional diameter across with the depth of the jumper wires within the bearer being 200mm across. On a vertical MDF section there can be between 200 wires per block in a bottom block and 2000 wires per top block (e.g. 200 wires per block x 10 blocks). Thus in a high-density wiring environment such as a telephone exchange, where wiring (and repairs to wiring) can also be subject to compressive forces which apply pressure to a wire in an inwards axial direction (for example, compression arising simply from the weight of the surrounding wiring), and where wiring repairs could be deformed/loosened and/or other degrade over time, forming repairs appropriately is extremely important. Any loss of contact between wires in a repair which is detrimental to the electrical transmission characteristics of the wiring can degrade the signal transmission characteristics of the repaired wire resulting in a further repair being required.

Accordingly, in a high-density wiring environment such as a telecommunications exchange MDF, all wiring and wiring repairs are required to have characteristics which to meet certain operational requirements. These repair requirements include those imposed by standard bodies for the telecommunications exchange environment. The wiring is required to meet thermal and conductivity criteria specifications at installation and to maintain performance specifications for these characteristics over a period of time as well as other physical specifications. For example, wiring must not become too brittle as it ages.

Unlike environments in which, when a wire breaks, the choice of method used to repair the wire is determined simply by the most convenient method, the choice of repair method within a telephone exchange environment should therefore meet certain regulatory standards. For example, a repair should result in the repaired joint being sufficiently strong and the repair should not negatively affect the electrical and/or signal transmission properties of the wire to which the repair has been applied and/or electrical and/or signal transmission properties of the surrounding wiring and/or cabling.

To achieve this, it is desirable if a repair can be performed in such a way that the cross-section of the repair joint has a low profile compared to the cross-section of each individual wire being joined so that the join formed by the repair does not increase the outer diameter of the cabling and/or wiring by more than a minimal amount. It is also desirable if the tensile strength of the cabling/wiring is at least maintained at a level comparable with that of each individual wire in the join, so that the repair joint does not form a point of weakness, or focal point, for subsequent breakage if the repaired wire is subsequently to strain.

When a wire or cable breaks in a high wiring density environment where there is very little space between adjacent cables and/or wires and/or wire pairs it is very desirable for the repair to be formed in a manner which restores the wire as closely as possible to its original condition. However, the close proximity of other wires and/or cables means that any repair must be capable of being carried out in a small space and ideally result in a repair which does not dramatically increase the diameter of the wire/cable at the break point (as this could cause the cable to catch or snag when being moved longitudinally and/or affect adjacent wiring) and ideally ensure that the repaired wire maintains a relatively high tensile strength compared to its original tensile strength. If not, then there is a chance that the wire will simply break again at the point of the repair if subjected to a similar amount of strain as that which caused the break in the first place.

United States patent application US2002/0057985 entitled "Copper Alloys for use as connector materials having high resistance to stress corrosion cracking and a process for producing the same" describes an copper alloy suitable for use as a connector material which has sufficient strength to withstand crimping which contains 17-32 wt% Zn, Sn and Sl and lists a range of other contents whose sum is 0.01 to 5wt%, provided that S is present in an amount up to 30ppm, the elements comprising at least one of the group consisting of: 0.01-3 wt% Fe, 0.01-5wt&Ni, 0.01-3 wt% Co, 0.01-3 wt% Ti, 0.01-2 wt% Mg, 0.01-2 wt% Zr, 0.01-1 wt% Ca, 0.01-10%wt Mn, 0.01-3 wt% Cd, 0.01-5 wt% Al, 0.01-3 wt% Pb, 0.01-3 wt% Bi, 0.01-3 wt% Be, 0.01-1 wt% Te, 0.01-3 wt% Y, 0.01-3 wt% La, 0.01-3 wt% Cr, 0.01-3 wt% Ce, 0.01-5 wt% Au, 0.01-5 wt% Ag and 0.01-5 wt% P.

United States patent US 4442182 A describes a one-piece composite electrical connector having a cast-aluminium bronze alloy CDA 955 at the mechanical connection end which includes as a percentage of the alloying elements in copper 10.0 to 11. 5 % Al, up to 3.5 % Mg, 3.0 to 5.0 % Fe, and 3.0 to 5.5 % Ni.

International patent application WO01/68928 A1 describes Be-Cu alloys including Be, Ni and/or Co, Pb, and Cu alloy components with respective operable wt% of 0.15 to 0.5, 0.40 to 1.40, 0.2 to 1.0, balance; respective typical wt% of: 0.2 to 0.4, 0.5 to 1.25, 0.2 to 0.60, balance; and respective more typical wt% of 0.25 to 0.35, 0.60 to 0.80, 0.25 to 0.50, and balance. In addition, the alloys can contain a total of 0.50 wt% of one or more of the following ingredients, typically as impurities: Fe, Al, Si, Cr, Zn, Sn, Ag, Mn, Mg, Ti, and Zr.

European Patent Application EP 1050594 A1 entitled Copper Alloy with improved resistance to cracking describes a copper alloy having improved resistance to cracking due to localized plastic deformation. The alloy consists essentially of: from 0.7 to 3.5 weight percent nickel; from 0.2 to 1 weight percent silicon; from 0.05 to 1 weight percent tin; from 0.26 to 1 weight percent iron; and the balance copper and unavoidable impurities. The copper alloy has a local ductility index of greater than 0.7 and a tensile elongation exceeding 5 %.

EP 1050594 A1 further describes one alloy in which nickel is from 1.2 to 2.8 weight percent, silicon is from 0.3 to 0.7 weight percent, tin is from 0.2 to 0.6 weight percent, iron is from 0.28 to 0.7 weight percent and the alloy further includes an effective amount of manganese for improving hot workability up to 0.15 weight percent and another alloy in which nickel is from 1.5 to 2.5 weight percent, silicon is from 0.35 to 0.55 weight percent, tin is from 0.3 to 0.5 weight percent, iron is from 0.3 to 0.5 weight percent and manganese is from 0.02 to 0.1 weight percent.

The invention seeks to provide in its various embodiments a method and means to repair wiring, particular, copper wiring locating in a high-density wiring environment, in which the resultant repair was found to have unexpectedly improved properties over known repair apparatus and methods for such environments. The invention seeks to be useful for repairing one or more of a plurality of wires located in a high wiring density environment where it is important that the external diameter of the cabling sheath is increases as little as possible by the repair. Such high-density wiring environments include cables comprising a plurality of wires housed within a cabling sheath, such as, for example, the cables which run within and to and from a telephone exchange main distribution frame (MDF). In addition, the material used to form a repair to copper wiring according to one or more embodiments of the invention is sufficiently malleable enough to permit forming the repair without exerting too much compressional force. Exerting too much compression when forming the crimp could affect the conductive properties of the repair, for example, by damaging the wires by overly reducing the cross-sectional area of the wiring within the repair or even severing a wire) when using a crimping tool.

A crimp joint according to the various embodiments of the invention comprises deformed material (i.e. the compressed or crimped material) which forms the repair resulting in a repair joint which has a narrow cross-sectional area but which is strong enough to withstand additional compressive forces and lateral strain exerted by movement of the repaired wiring or by the movement of other elements which come into contact with the wiring.

Thus at least one of the various embodiments of the present invention seeks to provide a method of repairing wiring in a high-density wiring environment such as a telephone exchange, in particular, but not exclusively for repairing the wiring which is connected to and runs within a main distribution frame in a telephone exchange environment.

By experimentation, an alloy has been found for constructing of cylindrical crimps which comprises a copper, iron, manganese, and nickel alloy composition. As the material properties are very suitable for forming tubular or cylindrical crimps, not only is the method of manufacturing the crimps very simple, but in addition, the crimps can be formed to have dimensions which make them very suitable for repairing electrical wiring in high-density wiring environments where frictional forces can be applied to repaired joints as well as compression forces. The material was found to yield quite unexpected results which met the criteria for crimp repairs to wiring in a telecommunications MDF environment, and to any other environment where wiring is present in very high wiring densities.

US4020546 discloses a method for making a cable splice joining a pair of flexible conducting cables.

US3739322 discloses a battery terminal clamp for storage batteries, the clamp comprising a copper alloy including nickel, iron and manganese.

Embodiments of the present invention seek to obviate and/or mitigate unnecessary wastage of material and enable a faster repair to be performed than in known in the art.

Aspects of the invention are as set out below and by the accompanying claims in which the dependent claims represent preferred embodiments of the invention. The invention also comprises any suitable combination of the aspects and preferred embodiments of the invention which are apparent to those of ordinary skill in the art.

A first aspect of the invention seeks to provide a crimp joint forming an electrical connection between two electrically conductive wires, the crimp joint comprising:
a crimp comprising a cylindrical tube of material composed of an alloy comprising copper, iron, nickel and manganese, wherein, within the tubular portion of the crimp body, a length of the first end of one of said wires is adjacent to a length of the other wire to overlap with said other wire in a longitudinal direction within the cylindrical crimp body.

The crimp may comprise a substantially copper alloy including about 10 to 13 % by weight in total of iron, nickel and manganese. The iron may be present in quantities of about 9 to 10%wt. The nickel may be present in quantities of about 1 to 2%wt. The manganese may be present in quantities of about 0.3 to 1 %wt.

The electrically conductive wires may have a substantially copper composition.

Each of said two electrically conductive wires may remain fixedly attached at a far end when a near end of each said wire is inserted into said cylindrical crimp body, and wherein the near end of each said wire is inserted into the same aperture of said crimp body.

Each of said two electrically conductive wires remains fixedly attached at a far end when a near end of each said wire is inserted into said cylindrical crimp body, and wherein the near end of each said wire is inserted into a different aperture of said crimp body and each said wire is pushed into said cylindrical crimp body sufficiently far to overlap with the other wire along the longitudinal axis of the crimp body.

The electrically conductive wires may lie substantially parallel to each other along the entire length of the crimp body.

The crimp may be comprised of an alloy having a manganese content of the alloy comprises 0.3 to 1 % by weight of the alloy content.

The crimp joint may be comprised of an alloy which comprises about 90% copper and 10% of an alloy of iron, nickel and manganese. The alloy may consist only of copper, iron nickel and manganese. The quantities may vary by a small fraction of the stated values or be exact. Trace quantities of elements may be present, for example, as impurities.

The crimp joint may be comprised of an alloy of iron, nickel and manganese which comprises about 9 to 11% iron, 1 to 2% nickel, and 0.3 to 1% manganese. The quantities may vary by a small fraction of the stated values or be exact. Trace quantities of elements may be present, for example, as impurities.

The crimp joint may be composed of an alloy conforming to the CN102 BS composition.

The crimp joint may have an internal diameter of 1.1 mm in cross-section.

Each of said wires in a said crimp may have a cross-sectional area of 1 mm², and the external diameter of the joint formed by the crimp around the two wires of 1mm² which overlap along the longitudinal axis of the cylindrical body of the crimp may range between 1.35 and 1.39 mm.

The thickness of the cylindrical wall of the crimp body may range between 0.35 and 0.39 mm.

The crimp joint may be used to repair a severed wire in a telecommunications exchange.

Each wire end may substantially comprise copper and have a diameter of at least 1mm². The external diameter of the crimp joint may range between 1.35 and 1.39 mm. The crimp joint may retain each wire when one, each or both wires are subjected to a tensile force of at least 50N. Each wire may be subjected to a tensile force of at least 51 N. Each wire may be subjected to a tensile force of at least 51.5N.

The crimp joint may be in a telecommunications exchange and each wire may be provided as a wire in a cable comprising a plurality of wire pairs. Each wire in the cable may be able to resist a pull-out force of 51 N applied in a longitudinal direction along the crimp joint. Each wire may be connected at one end to a main distribution frame in said telecommunications exchange. The plurality of wire pairs may comprise five wire pairs.

A crimp for use in forming a crimp joint according to the first aspect, the crimp comprising a cylindrical tube of material composed of an alloy comprising copper, iron, nickel and manganese, and capable of receiving within the tubular portion of the crimp body at least two wires.

The alloy may have a composition conforming to the British Standard CN102.

The preferred embodiments of the invention will now be described with reference to the accompanying drawings which are by way of example only and in which:
Figure 1 shows a schematic view of a main frame in a telecommunications exchange according to a first embodiment of the invention;
Figure 2A shows schematically a crimp joint rejoining the ends of two wires having a first wiring repair configuration;
Figure 2B shows schematically the crimp joint shown in Figure 2A with the joined ends of the wires removed;
Figure 2C shows schematically a crimp joint rejoining the ends of two wires having a second wiring repair configuration;
Figure 2D shows schematically the crimp joint shown in Figure 2C with the protruding ends of the rejoined wires removed;
Figure 2E shows schematically a cross-section through a crimp joint as shown in any of Figures 2A to 2D;
Figure 2F shows a cross-sectional view of the wiring within a cable comprising five pairs of wires;
Figure 3A shows a side-ways schematic view of a section of a cable 16 repaired according to an embodiment of the invention;
Figure 3B shows an enlarged schematic side-ways view of the location of a wire fault in a cable 16 according to an embodiment of the invention;
Figure 4A shows an enlarged schematic side-ways view of a crimp joint repairing in situ the wire fault in a cable 16 shown in Figures 3A and 3B;
Figure 4B shows an enlarged schematic cross-sectional view of the crimp joint shown in Figure 4A; and
Figure 4C shows schematically an enlarged view of the cross-section shown in Figure 3C.
The best mode of the invention will now be described with reference to the accompanying drawings.

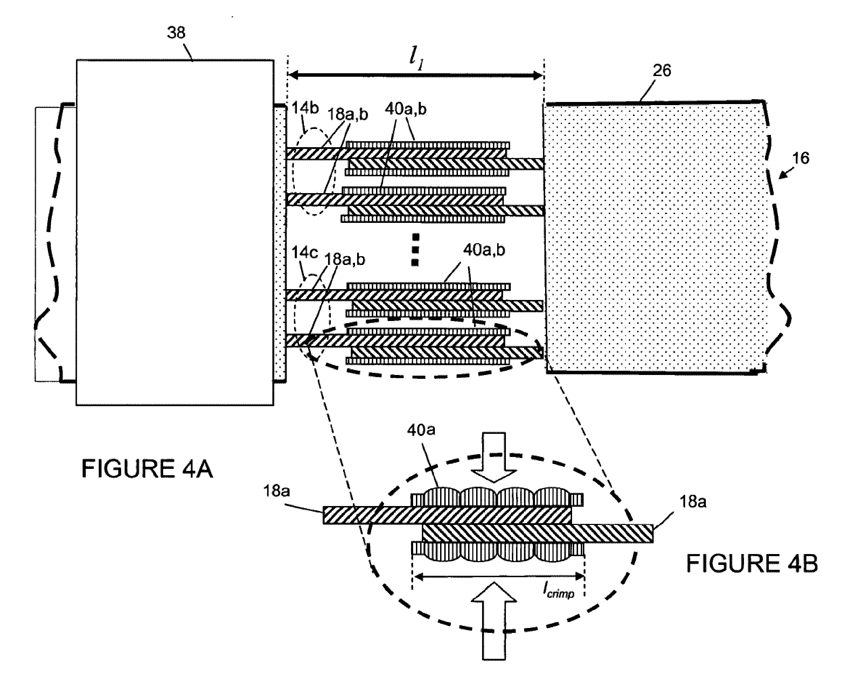

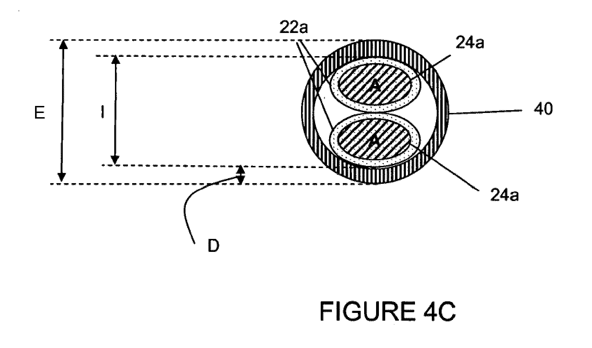

Those of ordinary skill in the art will be aware that for clarity the description may omit to directly refer to features of the invention whose inferred presence is apparent to one of ordinary skill in the art. Elements of the invention shown in Figures 4A,B,and C retain the numbering scheme shown in the previous drawings.

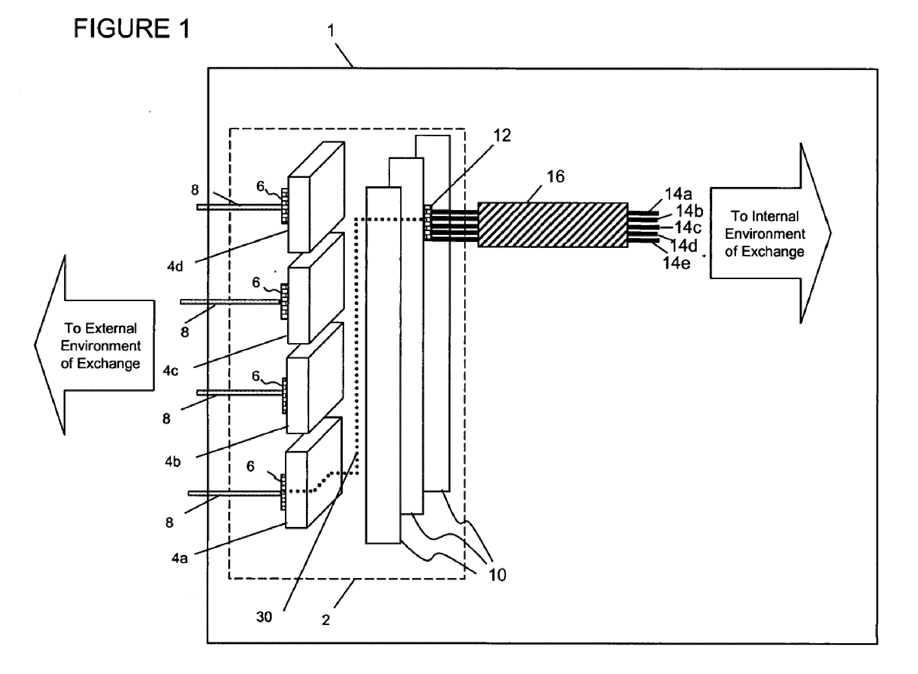

Figure 1 of the accompanying drawings shows as an example of a high-density wiring environment 1, a telephone exchange comprising an MDF 2. A typical MDF 2 in a telephone exchange may support the termination of hundred of thousands of connections to the premises of telecommunications service subscribers, although only a few are shown for the sake of clarity in Figure 1. Most subscriber premises receive telecommunications services via a pair of copper wires 14a, 14b, 14c, 14d, 14e which run from the local exchange to the subscriber premises. As a result, at the local exchange, hundreds of thousands of wires have to be accommodated and to do this the wires are packed tightly together, which forms the high-density wiring environment 1 in which duct space is very limited. The term high-density wiring environment is defined herein to imply an environment in which a sufficient amount of wires 18a, 18b and/or cables 16 are confined to a predetermined area to result in the movement of any one wire 18a, 18b and/or cable 16 resulting in a pressure change on one or more adjacent wires 18a, 18b and/or cables 16.

In Figure 1, MDF 2 has on a "D-side" a series of horizontal banks 4a..4d of termination blocks 6 on one side of a supporting frame (not shown) receives wiring 8 which comprises pairs of copper wires which connect subscriber premises to the exchange via an access network (not shown). On the other side of the frame, known in the art as the "E-side" of MDF 2, a series of vertical arrangements 10 of termination blocks 12 are provided to connect wiring to other equipment housed within the exchange via which other communications networks can be accessed. As shown in Figure 1, the wiring from the E-side of the MDF comprises a plurality of cables 16.

In a typical UK telephone exchange environment, five wire pairs 14a,b,c,d,e are bundled together to form a cable 16. Within the MDF, a jumper 30 comprising a twisted pair of copper wires form an internal connection between the D-side termination blocks 6 and the E-side termination blocks 12 for each subscriber.

As the duct space is so limited the wires 18a, 18b and cables 16 in a cable run/duct are so tightly packed that it is not normally possible to remove a long stretch of wire 18a, 18b / cable 16 if that wire 18a, 18b / cable 16 is damaged and/or is cut in two. Accordingly, it is very important for the wire 18a, 18b / cable 16 to be repaired effectively in situ and for the repaired wire 18a, 18b to have as low a profile as possible, to ensure that it is less likely to snag on something if moved. In addition, it is important that the repair is as strong as possible against "pull-out" forces, these being forces which compel the wires 18a, 18b to moved in such a way that they would soon work loose from any join repairing them.

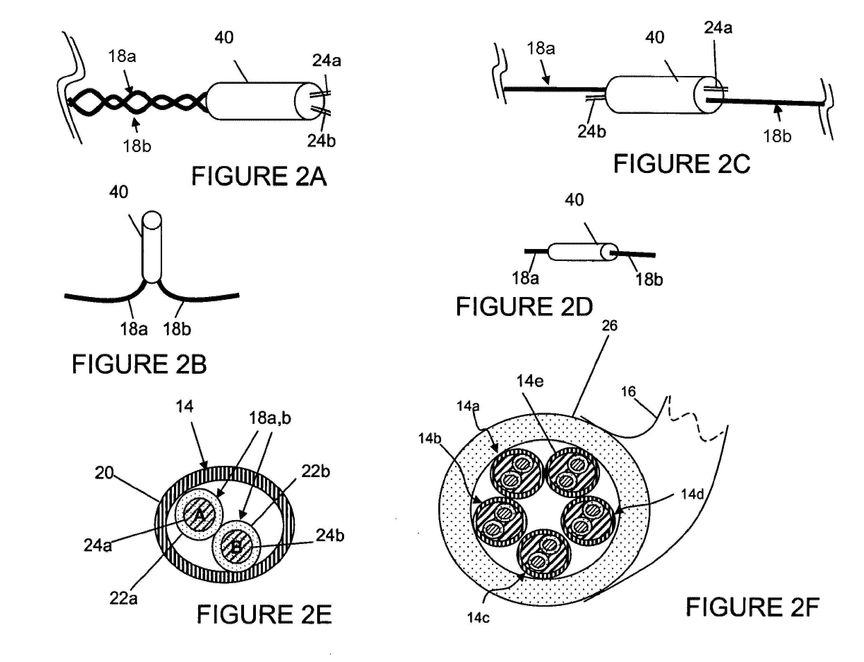

Two different wiring configurations can be repaired using a crimp 40 which permits the wires 18a, 18b which are to be joined to overlap each other in a longitudinal direction within the crimp joint formed, for example, contrast the embodiment of a crimp joint shown in Figures 2a,b with the embodiment of a crimp joint shown in Figure 2c,d respectively.

Figures 2A to 2E show a crimp joint which comprises a cylindrical crimp 40 which is used to join two wires 18a, 18b. Wire 18a comprises a copper core wire 24a surrounded by an insulating sheath 22a. Wire 18b comprises a copper core wire 24b surrounded by an insulating sheath 22b.

In Figure 2A, the insulating sheaths 22a, 22b have been removed from the ends of the two wires 18a, 18b, to expose the cooper cores 24a,24b and the exposed ends are slid into the same end of crimp 40 so that exposed copper wires 24a, 24b lie alongside each other aligned generally along the longitudinal axis of the crimp 40 according to an embodiment of the invention. The exposed ends of the two wires 24a, 24b are in electrical contact with each other and the cylindrical body of the crimp 40. Preferably, the crimp joint is formed by exerting pressure laterally on the crimp body, for example, by using a Knipex™ crimp tool. Figure 2B shows a resultant crimp joint, in which the ends of the copper wires 24a, 24b have been cut away so that all exposed copper is within the crimp 40. Not shown in Figures 2a or 2b is the presence of an insulating sheath which would be placed around the crimp 40 to ensure its electrical isolation from other potential electrical contacts.

Figure 2C shows an alternative embodiment of the invention in which the crimp joint is formed by sliding the two wires in opposing directions into the body of the crimp 40 so that the exposed copper cores 24a, 24b lie alongside each other aligned generally along the longitudinal axis of the crimp 40. The exposed ends of the two wires 24a, 24b are in electrical contact with each other and the cylindrical body of the crimp 40. Preferably, the crimp joint is formed by exerting pressure laterally on the crimp body, for example, by using a Knipex™ crimp tool. Figure 2D shows a resultant crimp joint, in which the ends of the copper wires 24a, 24b have been cut away so that all exposed copper is within the crimp 40. Not shown in Figures 2c or 2d is the presence of an insulating sheath which would be placed around the crimp 40 to ensure its electrical isolation from other potential electrical contacts.

Within the telecommunications exchange high-density wiring environment 1 shown in Figure 1, the crimp is suitable for use in repairing jumper wires, or copper twisted pair. However, the crimp joint formed in Figures 2b is less preferred than that shown in Figures 2d as the crimp joint is capable of being more easily snagged, whereas the crimp joint shown in Figure 2d is less likely to do so as it is formed in longitudinal alignment with the two copper wires it is repairing.

Figure 2E shows an expanded cross-sectional view of a pair of wires 14a-14e such as that shown above in Figure 2A. In Figure 2E, a pair of wires 14 comprises a twisted copper pair of wires 18a,18b which are enclosed within an insulating sheath 20. Each individual wire 18a, 18b comprises an insulating sheath 22a,22b respectively surrounding a signal conducting core 24a,24b respectively.

Figure 2F shows an expanded cross-sectional view of cabling 16 shown in Figure 1. As shown in Figure 1, cable 16 comprises an insulating sheath 26 surrounding five wire pairs 14a,...,14e. As shown in Figure 1, cable 16 runs from other equipment located in the exchange to the E-side of the termination block 12 of MDF 2. In Figure 2F, cable 16 is shown in cross-section as comprising five pairs of copper wires 14a,b,c,d,e known in the art as a five-pair fan-out tail. Each wire pair 14 forming a five-pair fan-out tail is terminated at a termination point 12 as shown in Figure 1 using individual termination points. An example of an E-side termination block 12 is a JT47 block and a wire pair 14 typically has a sheath 20 diameter of approximately 0.1 mm² in cross-sectional area.

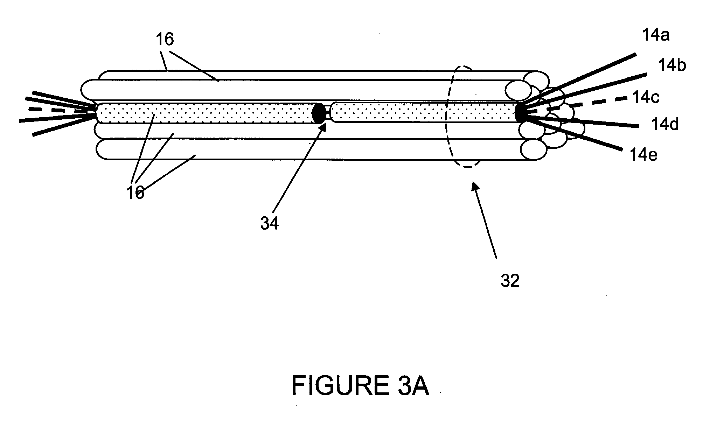

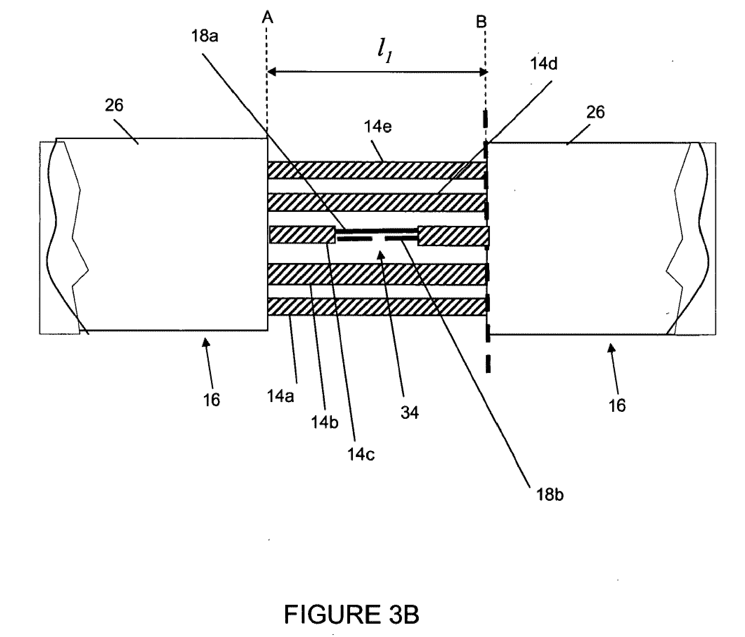

Figure 3A is a schematic diagram showing a high wiring density environment 32 in which a plurality of cables 16 are packed tightly together, for example, within a cable run or duct (not shown). Figure 3A shows an exemplary fault 34 affecting wire pair 14c (shown emerging from the cable as a dashed line in Figure 3A) which requires one or more wires located within a cable 32 to be repaired. Figure 3B shows a cross-section of a cable 16 housing a faulty wire 18b in which a length *I₁* of the cable sheath 26 has been cut away to expose the faulty wire 18b.

Figure 4A shows again the break of length *I₁* in the cable sheath 26 of cable 16 which has been removed to provide access to repair the faulty wire 18b. In order to comply with regulations, the sheath 26 of cable 16 must be repaired using a cylindrical section of material shown in Figure 4A as new cable repair sheath 38 which requires all of the wire pairs 14a...14e housed by cable 16 to be severed. Figure 4A shows two of the wire pairs 14b and 14c which have been repaired using a crimp according to an embodiment of the invention.

As shown in Figure 4A, a cylindrical, tubular, crimp 40 is used to re-join the severed ends of a wire 18a, 18b.

Figure 4B shows in more detail a side-ways cross-section of a crimp joint of length *I_{crimp}* which is joining the two severed ends of wire 18a according to an embodiment of the invention.

The crimp joint shown in Figure 4B was formed by a crimping tool which exerts crimping pressure (as indicated by the two block arrows in Figure 4B) at a plurality of pressure points spaced distally along the longitudinal axis of the crimp, for example, the Knipex 97 52 08 crimp tool can be used to form the crimp joint.

The crimp according to one embodiment of the invention comprises a copper, nickel and manganese metal alloy. For example, in one embodiment the composition of the alloy comprises 90% copper and 10 % nickel-iron alloy by weight. The copper-nickel-iron alloy preferably comprises 9-11%wt nickel, 1-2%wt (e.g. 1 to 1.8%wt) iron, which trace amounts of manganese, for example, 0.3 to 1.0%wt (e.g. 0.5-1.0%wt) manganese with the remainder copper. Very small quantities of lead and trace impurities may be present. The preferred alloy has the CN102 BS specification or equivalent. CN102 BS is a copper nickel iron alloy with a small alloy content of manganese.

BS2874 CN102 has the ISO designation CuNi10Fe1Mn and has the international equivalents EN12163 CW, 352H ASTM, B121 C70600. Its chemical composition is listed by Wt.% and is given as Ni% 10-11, Mn% 0.5-1, Fe%1-2, Pb 0- 0.01%, Impurities 0.3 max, with the remainder Cu%. In one embodiment of the invention, the crimp has this chemical composition.

This alloy is known to have excellent resistance to sea and brackish water and combines easy fabrication with good mechanical properties between -100 and 300 degrees Celsius. The iron and manganese content of the alloy improve the mechanical properties and its resistance to corrosion and erosion. This material has been found to be sufficiently malleable and to have a sufficient tensile strength to enable its extrusion about a bore into a tubular or cylindrical form from which, by severing lengths of the extruded material, cylindrical crimps can be obtained which have surprisingly useful material properties suitable for the purpose of repairing copper wires.

Figure 4C shows in more detail a cross-section through a crimp joint. The crimp joint shown in Figure 4C comprises a cylindrical crimp 40 which forms a boundary around the ends of wire 18a. Each severed part of wire 18a is placed within the crimp 40 so that they overlap with each other along the longitudinal direction of the crimp 40.

This shortens the severed part of wire 18a by at least *I_{crimp}.*

The crimp which is shown in a used state in Figure 4C has an overall external diameter E, and internal diameter I, and a sheath thickness D. Typical figures for a crimp joint formed according to one embodiment of the invention are:
E = 1.45 to 1.49mm
I = 1 .0 to 1.1 mm
D = 0.35 to 0.49mm.

Thus, a crimp 40 according to an embodiment of the invention has sufficient deformability and strength to enable the overlapping ends of the wires being repaired within the crimp to be suitably compressed when forming the crimp joint.

The crimp was subject to an accelerated ageing testing using test conditions which heated a crimp joint in a range of dry and humid conditions at various temperatures. For example, a crimp was subjected to a test cycle of 20 hours dry at 70°C, followed by 4 hours at 40°C and 93% relative humidity (RH), for four cycles, to give the overall test conditions of 80 hours in 70°C dry heat and for 16 hours at 40°C with a relative humidity of 93%.

The results of the initial electrical resistance and the aged sample resistance for two copper wires of approximately 1mm² cross-sectional area repaired with a crimp having a 1.1 mm internal diameter I according to an embodiment of the invention are shown below.

**Table 1 - resistance of aged samples.**

| Sample Number: | Initial Resistance (mΩ) | Resistance of Aged Sample (mΩ) |
|---|---|---|
| 1 | 13.53 | 14.51 |
| 2 | 13.16 | 15.89 |
| 3 | 13.58 | 26.48 |
| 4 | 12.92 | 14.54 |
| 5 | 13.62 | 26.04 |

Table 1 shows the resistance in milliohms (mΩ) of a 150 mm sample length of a copper wire 18a, 18b such as is known in the art to form a wire pair 14, where 5 wire pairs form a fan-out tail in a telephone exchange and before repair have a resistance of 12 mΩ. The initial resistance is the resistance of the 150 mm repaired jumper just after the repair is formed is shown in Column 2 and the aged resistance shown is the resistance after the full 80 hour test cycle as described herein above. The resistances shown comprise the overall resistance of the wires when repaired using a crimp 40 according to an embodiment of the invention, for example a crimp 40 comprising the CN102 metal alloy or other copper-iron alloy comprising a 0.1 to 1% manganese, and preferably 0.3 to 1% manganese alloy content.

A repair joint formed using a crimp having a copper-iron-manganese alloy composition such as CN102 according to an embodiment the invention was also tested for breakage when subjected to a pull-out force.

In one embodiment a crimp 40 having a 1.1 mm internal diameter is used to form a crimp around two copper wires 18a, 18b of approximately 1mm² cross-sectional area. The results are set out below for a set of five-wire samples forming a typical 5 pair fan-out tail in a high-density environment such as a telephone exchange. The wires each have slightly differing electrical resistances which were subject to a tensile force along the longitudinal axis of the wires (a "pull-out force"):

**Table 2, pull-out force for a five-pair fan-tail repaired by a crimp 40 according to an embodiment of the invention.**

| Sample Wire | Resistance (mΩ) | Pull-Out Force (N) |
|---|---|---|
| 1 (blue) | 12.42 | 57.5 |
| 2 (orange) | 12.47 | 56.5 |
| 3 (green) | 12.59 | 53.0 |
| 4 (brown) | 12.54 | 54.7 |
| 5 (slate) | 12.44 | 51.6 |
| High | 12.59 | 57.5 |
| Average | 12.49 | 54.66 |
| Low | 12.42 | 51.6N (Lower limit (80%) = 41.44N) |

Table 3 below shows for comparison the forces exerted on the crimp joint according to the invention which was used to repair wires in a fan-tail compared to the forces at which a crimp joint having the same internal diameter but a different composition broke at when subjected to strain.

The wire colours in Table 1 refer to the wires in an exemplary fan-tail in a telephone exchange environment. The crimps were all formed using the Knipex crimp tool.

**Table 3 comparison of pull-out forces exerted on crimps of different composition.**

| Copper Butt standard crimp | Copper wire Resistance without crimp = 12.35mΩ | Tensile strength of copper wire = 51.8N |
|---|---|---|
| **Wire Colour** | **Resistance (mΩ)** | **Pull out / break force (N)** |
| Blue | 12.7 | 57.9 |
| Orange | 12.46 | 56.1 |
| Green | 14.92 | 44.5 |
| Brown | 15.30 | 56.7 |
| Slate | 12.69 | 54.3 |
| **High** | **15.30mΩ** | **57.9N** |
| **Average** | **13.614mΩ** | **53.9N** |
| **Low** | **12.46mΩ** | |
| | | |
| CN102 crimp drilled 1.1 mm through joint | | |
| **Wire Colour** | **Resistance (mΩ)** | **Pull out force (N)** |
| Blue | 12.42 | 57.5 |
| Orange | 12.47 | 56.5 |
| Green | 12.59 | 53.0 |
| Brown | 12.54 | 54.7 |
| Slate | 12.44 | 51.6 |
| **High** | **12.59mΩ** | **57.5N** |
| **Average** | **12.49mΩ** | **54.66N** |
| **Low** | **12.42mΩ** | |
| | | |
| Brass Crimp drilled 1.1 mm. Through joint | | |
| **Wire Colour** | **Resistance (mΩ)** | **Pull out force (N)** |
| Blue | 12.42 | 50.6 |
| Orange | 12.74 | 45.1 |
| Green | 13.25 | 49.1 |
| Brown | 12.41 | 53.0 |
| Slate | 12.42 | 50.6 |
| **High** | **13.25mΩ** | **53**.**0N** |
| **Average** | **12.648mΩ** | **49.68N** |
| **Low** | **12.41mΩ** | |
| | | |
| Brass Crimp drilled 1.1mm through joint. Wire stripped with ITT cannon cable stripper 9mm long | | |
| **Wire Colour** | **Resistance (mΩ)** | **Pull out force (N)** |
| Blue | | 56.3 |
| Orange | | 50.8 |
| Green | | 54.1 |
| Brown | | 56.7 |
| Slate | | 57.1 |
| **High** | | **57.1 N** |
| **Average** | | **55**.**0N** |
| **Low** | | |

The average pull-out force which broke a wire using a crimp comprising an alloy according to the invention is the second highest shown above. A crimp 40 according to the invention also enabled all of the wires to withstand a higher force than any of the other crimps, for example, the lowest force at which a wire repaired using a crimp according to an embodiment of the invention broke at was 51.6 N.

The inventor has thus found that a crimp having an approximately 90% copper 10% iron by weight metal alloy composition which contains a small quantity of manganese (preferably 0.3 to 1%) and which has a wall thickness of 0.35 to 0.39 wall thickness and an internal cross-sectional diameter of 1.1 mm is sufficiently strong to withstand a pull-out force of over 50N, and preferably over 51 N, and more preferably over 51.6N when used to repair copper wires of 1mm² for a longitudinal crimp cylinder length of 10mm.

The CN102 British Standard alloy is known for use in marine environments as the manganese content provides corrosion resistance in salt and brackish water, and is also known for use in fishing tackle. The CN102 alloy is based on copper and nickel with the minor addition of iron and manganese and is noted for its resistance to withstand sea water corrosion and erosion. The CN102 alloy is used widely for example in heat exchangers cooling plants, desalination treatment plants and other water treatment plants. The inventor found that by repurposing fishing tackle to have dimensions suitable for use as a crimp in a telecommunications exchange environment, the crimp joints formed had physical properties which were particularly advantageous when compared to crimps formed from more conventional materials, and which could be manufactured more cheaply.

Expressions which indicate an alloy consists of certain percentages of elements by weight may also refer to alloys which include the present of other trace elements as impurities even when no explicit reference is made to refer to such trace elements. In addition or in the alternative, an alloy which consists of certain percentages of elements by weight may also include trace elements which have no effect on the material properties of the alloy from a crimping perspective. Such trace elements will ideally be present as less than 0.1 %wt.

The crimp body is provided substantially in a cylindrical form consisting of a hollow elongated shape with at least one and preferably two open ends through which a pair of wires may pass. It can be formed by suitably extruding a longer cylinder of material and segmenting this into a number of shorter sections. Alternatively individual crimps could be formed by moulding either individual crimps or a longer cylinder and segmenting this into sections. Alternatively, a sheet of material could be rolled or otherwise deformed into an appropriately cylindrical form, either to form an individual crimp or to create a longer cylindrical which can be segmented into a plurality of crimps using any suitable method.

A cylindrical form may have a circular or non-circular (e.g. triangular, square or other polygonal shape) in cross-section and the form need not be uniform along the length of the cylinder (although out of preference in practice the form is likely to be substantively the same along the length of the cylinder).

It is possible to also provide a crimp as a sheet material or as material provided in an unclosed cylindrical form which is then deformed in situ around wiring to form a cylindrical crimp joint wiring repair according to the invention.

In this way, however, a crimp may be manufactured and/or provided in situ which consists only of a cylindrical body surrounding the wiring to be crimped.

## Claims

1. A crimp (40) comprising a cylindrical tube of material, **characterised in that** the material is an alloy comprising copper, iron, nickel, manganese and lead including:
nickel present in quantities of 9 to 11 %wt;
iron present in quantities of 1 to 2 %wt;
manganese present in quantities of 0.3 to 1 %wt; and
lead present in quantities of up to 0.1 %wt.

2. A crimp (40) as claimed in claim 1, wherein:
the iron is present in quantities of 1 to 1.8 %wt; and
the manganese is present in quantities of 0.5 to 1 %wt.

3. A crimp (40) as claimed in claim 1 or 2 wherein lead is present in quantities up to 0.01 %wt.

4. A crimp (40) as claimed in claim 2 wherein nickel is present in quantities of 10 to 11 %wt.

5. A crimp (40) as claimed in any one of claims 1 to 4, the crimp dimensions comprising:
an external diameter of 1.45 to 1.49 mm;
an internal diameter of 1.0 to 1.1 mm; and
a sheath thickness of 0.175 to 0.245 mm.

6. A crimp joint forming an electrical connection between two electrically conductive wires (18a, 18b), the crimp joint comprising:
a crimp (40) according to any preceding claim; and
exposed ends (24a, 24b) of the two wires (18a, 18b);
wherein, within the crimp (40), a length of an exposed end (24a) of the first wire (18a) is adjacent to a length of an exposed end (24b) of the other wire (18b) to overlap with said first wire (18a) in a longitudinal direction within the crimp (40).

7. A crimp joint as claimed in claim 6, wherein the crimp (40) has an internal cross-sectional diameter of 1.1 mm and said two electrically conductive wires (18a, 18b) have a cross-sectional area of 1mm².

8. A crimp joint as claimed in claim 6 or 7, wherein each of said two electrically conductive wires (18a, 18b) remains fixedly attached at a far end when a near end of each said wire (18a, 18b) is inserted into said crimp (40), wherein either:
the near end of each said wire (18a, 18b) is inserted into the same aperture of said crimp (40); or
the near end of each said wire (18a, 18b) is inserted into a different aperture of said crimp (40) and each said wire (18a, 18b) is pushed into said crimp (40) sufficiently far to overlap with the other wire (18a, 18b) along the longitudinal axis of the crimp (40).

9. A crimp joint as claimed in claim 8, wherein said electrically conductive wires (18a, 18b) lie parallel to each other along the entire length of the crimp (40).

10. A crimp joint as claimed in any of claims 6 to 9 not depending on claim 5, wherein
each exposed wire end (24a, 24b) comprises copper and has a cross-sectional area of at least 1mm²; and
the external diameter of the crimp joint ranges between 1.35 and 1.39 mm.

11. The use of a crimp joint according to any of claims 6 to 10 for repairing a severed wire in a telecommunications exchange.

## Patentansprüche

1. Crimp-Verbinder (40), der ein zylindrisches Rohr aus einem Material umfasst,
**dadurch gekennzeichnet, dass** das Material eine Legierung mit Kupfer, Eisen, Nickel, Mangan und Blei ist, die enthält:
Nickel, das in Mengen von 9 bis 11 Gew.-% vorliegt, Eisen, das in Mengen von 1 bis 2 Gew.-% vorliegt, Mangan, das in Mengen von 0,3 bis 1 Gew.-% vorliegt, und
Blei, das in Mengen von bis zu 0,1 Gew.-% vorliegt.

2. Crimp-Verbinder (40) wie in Anspruch 1 beansprucht, bei dem das Eisen in Mengen von 1 bis 1,8 Gew.-% vorliegt
und
das Mangan in Mengen von 0,5 bis 1 Gew.-% vorliegt.

3. Crimp-Verbinder (40) wie in Anspruch 1 oder 2 beansprucht, bei dem Blei in Mengen von bis zu 0,01 Gew.-% vorliegt.

4. Crimp-Verbinder (40) wie in Anspruch 2 beansprucht, bei dem Nickel in Mengen von 10 bis 11 Gew.-% vorliegt.

5. Crimp-Verbinder (40) wie in einem der Ansprüche 1 bis 4 beansprucht, wobei die Abmessungen des Crimp-Verbinders umfassen:
einen Außendurchmesser von 1,45 bis 1,49 mm,
einen Innendurchmesser von 1,0 bis 1,1 mm und
eine Dicke der Ummantelung von 0,175 bis 0,245 mm.

6. Crimp-Verbindung, die eine elektrische Verbindung zwischen zwei elektrisch leitenden Drähten (18a, 18b) bildet, wobei die Crimp-Verbindung umfasst:
einen Crimp-Verbinder (40) nach einem vorhergehenden Anspruch
und
freiliegende Enden (24a, 24b) der beiden Drähte (18a, 18b), wobei innerhalb des Crimp-Verbinders (40) eine Länge eines freiliegenden Endes (24a) des ersten Drahtes (18a) einer Länge eines freiliegenden Endes (24b) des anderen Drahtes (18b) benachbart ist, der den ersten Draht (18a) in einer Längsrichtung innerhalb des Crimp-Verbinders (40) überlappt.

7. Crimp-Verbindung wie in Anspruch 6 beansprucht, bei welcher der Crimp-Verbinder (40) einen Innendurchmesser im Querschnitt von 1,1 mm aufweist und die zwei elektrisch leitenden Drähte (18a, 18b) eine Querschnittsfläche von 1 mm² besitzen.

8. Crimp-Verbindung wie in Anspruch 6 oder 7 beansprucht, bei der jeder der zwei elektrisch leitenden Drähte (18a, 18b) an einem entfernten Ende starr befestigt bleibt, wenn ein nahes Ende von jedem Draht (18a, 18b) in den Crimp-Verbinder (40) eingeführt wird, wobei entweder
das nahe Ende jedes Drahtes (18a, 18b) in die gleiche Öffnung des Crimp-Verbinders (40) eingeführt wird oder
das nahe Ende jedes Drahtes (18a, 18b) in eine unterschiedliche Öffnung des Crimp-Verbinders (40) eingeführt wird und jeder Draht (18a, 18b) ausreichend weit in den Crimp-Verbinder (40) eingeschoben wird, so dass er längs der Längsachse des Crimp-Verbinders (40) den anderen Draht (18a, 18b) überlappt.

9. Crimp-Verbindung wie in Anspruch 8 beansprucht, bei der die elektrisch leitenden Drähte (18a, 18b) längs der gesamten Länge des Crimp-Verbinders (40) parallel zueinander liegen.

10. Crimp-Verbindung wie in einem der Ansprüche 6 bis 9 beansprucht ohne Abhängigkeit von Anspruch 5, bei der
jedes freiliegende Drahtende (24a, 24b) aus Kupfer besteht und eine Querschnittsfläche von mindestens 1 mm² aufweist
und
der Außendurchmesser der Crimp-Verbindung im Bereich von 1,35 bis 1,39 mm liegt.

11. Verwendung einer Crimp-Verbindung nach einem der Ansprüche 6 bis 10 zum Reparieren eines gebrochenen Drahtes in einer Telekommunikations-Vermittlungseinrichtung.

## Revendications

1. Sertissage (40) comprenant un tube de matériau cylindrique, **caractérisé en ce que** le matériau est un alliage comprenant du cuivre, du fer, du nickel, du manganèse et du plomb, comprenant :
du nickel présent selon des quantités de 9 à 11 % en poids;
du fer présent selon des quantités de 1 à 2% en poids ;
du manganèse présent selon des quantités de 0,3 à 1% en poids ; et
du plomb présent selon des quantités allant jusqu'à 0,1% en poids.

2. Sertissage (40) selon la revendication 1, dans lequel:
le fer est présent selon des quantités de 1 à 1,8% en poids ; et
le manganèse est présent selon des quantités de 0,5 à 1% en poids.

3. Sertissage (40) selon la revendication 1 ou 2, dans lequel le plomb est présent selon des quantités allant jusqu'à 0,01% en poids.

4. Sertissage (40) selon la revendication 2, dans lequel le nickel est présent selon des quantités de 10 à 11% en poids.

5. Sertissage (40) selon l'une quelconque des revendications 1 à 4, les dimensions du sertissage comprenant:
un diamètre externe de 1,45 à 1,49 mm ;
un diamètre interne de 1,0 à 1,1 mm ; et
une épaisseur de gaine de 0,175 à 0,245 mm.

6. Joint de sertissage formant une connexion électrique entre deux fils électriquement conducteurs (18a, 18b), le joint de sertissage comprenant :
un sertissage (40) selon l'une quelconque des revendications précédentes ; et
les extrémités exposées (24a, 24b) des deux fils (18a, 18b) ;
dans lequel, à l'intérieur du sertissage (40), une longueur d'une extrémité exposée (24a) du premier fil (18a) est adjacente à une longueur d'une extrémité exposée (24b) de l'autre fil (18b) pour recouvrir ledit premier fil (18a) dans une direction longitudinale à l'intérieur du sertissage (40).

7. Joint de sertissage selon la revendication 6, dans lequel le sertissage (40) a un diamètre transversal interne de 1,1 mm et lesdits deux fils électriquement conducteurs (18a, 18b) ont une surface transversale de 1 mm².

8. Joint de sertissage selon la revendication 6 ou 7, dans lequel chacun desdits deux fils électriquement conducteurs (18a, 18b) reste fixé de manière fixe à une extrémité éloignée lorsqu'une extrémité proche de chacun desdits fils (18a, 18b) est insérée dans ledit sertissage (40), dans lequel :
soit l'extrémité proche de chacun desdits fils (18a, 18b) est insérée dans la même ouverture dudit sertissage (40) ; ou bien
l'extrémité proche de chacun desdits fils (18a, 18b) est insérée dans une ouverture différente dudit sertissage (40) et chacun desdits fils (18a, 18b) est poussé dans ledit sertissage (40) suffisamment loin pour recouvrir l'autre fil (18a, 18b) le long de l'axe longitudinal du sertissage (40).

9. Joint de sertissage selon la revendication 8, dans lequel lesdits fils électriquement conducteurs (18a, 18b) sont parallèles entre eux le long de toute la longueur du sertissage (40).

10. Joint de sertissage selon l'une quelconque des revendications 6 à 9 ne dépendant pas de la revendication 5, dans lequel
chaque extrémité de fil exposée (24a, 24b) comprend du cuivre et a une surface transversale d'au moins 1 mm² ; et
le diamètre externe du joint de sertissage est compris entre 1,35 et 1,39 mm.

11. Utilisation d'un joint de sertissage selon l'une quelconque des revendications 6 à 10 pour réparer un fil sectionné dans un central téléphonique.
